Europäisches Patentamt

European Patent Office

Office européen des brevets

(11) Publication number: **0 516 241 A1**

# EUROPEAN PATENT APPLICATION

(21) Application number: **92201515.1**

(22) Date of filing: **27.05.92**

(51) Int. Cl.5: **B62M 23/00**

(30) Priority: **28.05.91 IT NO910004**

(43) Date of publication of application:
**02.12.92 Bulletin 92/49**

(84) Designated Contracting States:
**AT BE CH DE DK ES FR GB IT LI LU MC NL PT SE**

(71) Applicant: **Ubezio, Antonio**
**Via Biglieri, 14**
**I-28100 Novara(IT)**

(72) Inventor: **Ubezio, Antonio**
**Via Biglieri, 14**
**I-28100 Novara(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Two-wheeler with transmission for both front and rear drive.**

(57) Two-wheeler with transmission means for both front and rear drive, of the type comprising a frame (11) bearing a front wheel (12) and a rear wheel (13) driven by a chain transmission means (14), which, in its turn, is driven by driving organs (15) and which interacts with a plurality of sprocket wheels installed on a hub (17) of the rear wheel (13), wherein, between the sprocket wheels of the rear wheel (13) and a hub (38) of said front wheel (12), there is interposed a drive transmission means, of disengageable type, which transmits the driving motion also the front wheel (12).

The present invention relates to a two-wheeler with transmission means for both rear and front drive.

The well-known two-wheelers, i.e., bicycles, motor-bikes and motor-cycles, are usually equipped with only one-wheel-drive, in particular rear-wheel drive.

This is so, because many attempts were carried out in the past aiming at turning both rear wheel and front wheel into driving wheels, but the difference in front and rear wheel revolutions number when steering have always hindered such a development.

The purpose of the present invention is mainly of solving such a technical problem, and therefore providing a two-wheeler with possibility of both rear and front drive.

This purpose according to the present invention is achieved by means of a two-wheeler with transmission means for both front and rear drive, which two-wheeler is of the type comprising a frame bearing a front wheel and a rear wheel driven by a chain transmission means, which is driven by driving organs and which interacts with a plurality of sprocket wheels installed on a hub of said rear wheel, wherein, between the sprocket wheels of said rear wheel and a hub of said front wheel, there is interposed a drive transmission means, of disengageable type, in order to transmit the driving motion also the front wheel.

The characteristics and advantages of a two-wheeler according to the present invention will be clearer from the following disclosure, made by referring to the relevant schematic drawing of a particular, exemplifying, non-limitative form of practical embodiment, relevant to a bicycle.

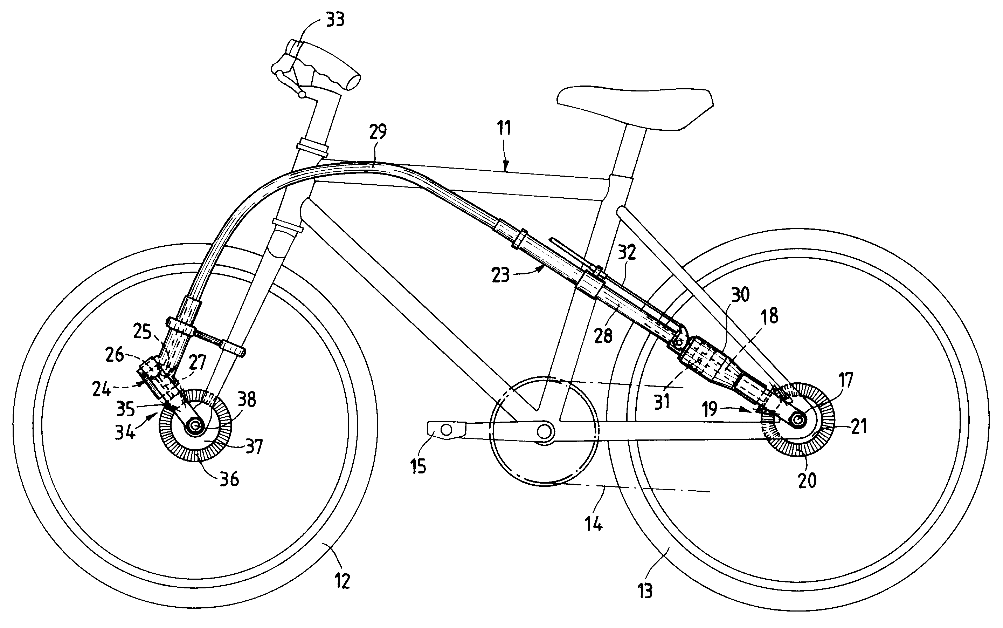

In fact, a bicycle is shown in its essential features, which bicycle comprises a frame 11 supporting a front wheel 12 and a rear wheel 13 driven by a driving chain transmission 14, which, in its turn, is driven by relevant pedals 15, and which interacts with a set of sprocket wheels of well-known type, not shown in the drawing.

Between said sprocket wheels and the hub of the wheel 17, there is interposed a first freewheel, also of well-known type, not shown in the drawing, which, in a customary way, makes it possible the motion to be transmitted when the cyclist actuates the pedals, while anyway allowing the real wheel 13 to continue to revolve when pedals 15 are stopped.

Then a first pair of bevel gear wheels, generally indicated with the reference numeral 19, is provided, which comprises a first bevel gear wheel 20 installed on a second freewheel assembly 21 which, in its turn, is installed on the hub 17, which rotatably supports the rim of the rear wheel 13.

One should observe now that said second freewheel assembly 21 makes it possible the revolution to take place in the same direction as the revolution direction of said first freewheel assembly, although said second freewheel assembly 21 is mounted on the opposite side of said hub 17, in reversed position relatively to said first freewheel assembly.

To a second gear wheel 22 of the first pair of bevel gear wheels 19 a shaft element -- indicated with the reference numeral 23 -- is constrained, which transmits the motion to a second pair of bevel gear wheels, generally indicated with the reference numeral 24, simultaneously reversing the revolution direction.

Also such a second bevel gear wheel pair 24 is constituted by a bevel gear wheel 25 with which a bevel pinion 26 inmeshes, which extends from a second shaft 27 which supports the whole motion transmission which transmits the motion to the front wheel 12.

The shaft element 23 consists of a first, rigid, portion 28, and a second, flexible, portion 29, which are constrained by means of a coupling assembly 30, for example of the type provided with front teeth 31 respectively positioned the end of the rigid portion 28 of said shaft element 23, and at the end of a shaft 18 integral with the second gear wheel 22, to get engaged and disengaged, at will -- by means of a suitable control means consisting of a lever and a relevant bowden cable 32, installed on the handlebar 33 with the first pair of bevel gears 19.

At the opposite end of said flexible portion 29 of the transmission means, there is installed said second pair of bevel gears 24, which, in its turn, interacts with a third pair of bevel gears 34, also consisting of a bevel gear pinion 35 which inmeshes with a relevant gear wheel 36. The latter gear wheel is installed, in its turn, on said hub 38 bearing the rim of said front wheel 12.

The third freewheel assembly 37 will be equal to the first freewheel assembly which supports the sprocket wheels of the speed change gear.

Therefore, according to the present invention, the cyclist can turn the front wheel 12 into a road wheel (i.e., an idling wheel), by disengaging the front teeth 31 by acting on the control lever 32. Should it be so needed, in order to get over slopes, as well as for an advantageous distribution of the drive torque also on the front wheel 12, the cyclist will act on the coupling means in order to mutually engage the front teeth 31, and also the front wheel 12 will be turned into a driving wheel.

In fact, when the cyclist actuates the pedals 15 to revolve, the transmission chain 14 transmits the motion, in customary fashion, to the rear wheel 13. The revolution motion of the hub 17 furthermore promotes the mutual interaction of the gear wheels 20 and 22 which constitute the first pair of bevel gears 19. The latter, in their turn, cause the second pair of bevel gear wheels 24 to revolve. The gear wheels 25 and 26 of the latter cause then the portions 28 and 29 of the transmission shaft element 23 -- kept constrained to said first pair of bevel gear wheels 19 by the front teeth 31 -- to revolve. The revolution of the shaft element 28, 29 causes then the third pair of gear wheels 34, with its gear wheels 35, 36, to revolve, consequently driving the front wheel 12 to revolve.

In order that the system according to the present invention can properly operate also while steering, the rear wheel 13 is advantageously provided with a longer circumference than the front wheel 12.

According to an alternative form of practical embodiment, this advantage can be achieved with different-diameter tires, or by taking advantage of the possibility of inflating the tires to different extents.

According to a further alternative form of practical embodiment, in a motor-cycle or motor-byke, the pedals 15 are constituted by motor means, and the sprocket gears of the speed change gear are normal gears, as commonly used in motor-driven two-wheelers.

## Claims

1. Two-wheeler with transmission means for both front and rear drive, which two-wheeler is of the type comprising a frame (11) bearing a front wheel (12) and a rear wheel (13) driven by a chain transmission means (14), which is driven by driving organs (15) and which interacts with a plurality of sprocket wheels installed on a hub (17) of the rear wheel (13), characterized in that, between said sprocket wheels of said rear wheel (13) and a hub (38) of said front wheel (12), there is interposed a drive transmission means, of disengageable type, in order to transmit the driving motion also to said front wheel (12).

2. Two-wheeler according to claim 1, characterized in that said interposed drive transmission means comprises a set of three pairs of bevel gears (19, 24, 34) interconnected by a motion transmission-shaft element (23) and connected with said front wheel (12) and said rear wheel (13).

3. Two-wheeler according to claim 1, characterized in that said interposed drive transmission respectively comprises said sprocket wheels installed, through a first freewheel assembly, on a hub (17) which makes it possible the motion to be transmitted when said driving organs (15) are enabled, and allows said rear wheel (13) to anyway revolve, when said driving organs (15) are disabled.

4. Two-wheeler according to claim 2, characterized in that said first bevel gear pair (19) comprises a first bevel gear (20) installed on a second freewheel assembly (21) which, in its turn, is installed on said hub (17) which rotatably supports the rim of the rear wheel (13).

5. Two-wheeler according to claim 4, characterized in that said second freewheel assembly (21) makes it possible the revolution to take place in the same direction as the revolution direction of said first freewheel assembly, although said second freewheel assembly (21) is mounted on the opposite side of said hub (17), in reversed position relatively to said first freewheel assembly.

6. Two-wheeler according to claim 4, characterized in that a second gear wheel (22) of said first bevel gear pair (19) bears a constrained shaft element (23) which transmits the motion to a second bevel gear pair (24), which reverses the motion.

7. Two-wheeler according to claim 2, characterized in that said second bevel gear pair (24) is constituted by a bevel gear (25), with which a bevel pinion (26) inmeshes, which extends from a second shaft (27) which supports the whole motion transmission means which transmit the motion to said front wheel (12).

8. Two-wheeler according to claim 2, characterized in that said shaft element (23) consists of a first, rigid, portion (28), and a second, flexible, portion (29), which are constrained to each other, and can be coupled, by means of a coupling assembly (30), with said first pair of bevel gear wheels.

9. Two-wheeler according to claim 8, characterized in that said coupling assembly (30) comprises front teeth (31) positioned on mutually opposite ends of said shaft element (23) and said first pair of bevel gear wheels (19), which can be mutually disengaged, at will, by means of a suitable control means consisting of a lever and a relevant bowden cable (32), installed on the handlebar (33).

10. Two-wheeler according to claim 8, characterized in that at the opposite end of said flexible portion (29) of the transmission means, there is installed said second pair of bevel gears (24), which, in its turn, interacts with a third pair of bevel gears (34), also consisting of a bevel gear pinion (35) which inmeshes with a relevant gear wheel (36), with said gear wheel (36) being installed on a third frewheel assembly (37) which, in its turn, is mounted on said hub (38) bearing the rim of said front wheel (12).

European Patent Office

**EUROPEAN SEARCH REPORT**

Application Number

EP    92 20 1515

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 623 157 (VALAT) <br> * the whole document * | 1 | B62M23/00 |
| Y | | 2-4 | |
| A | | 9 | |
| Y | US-A-5 004 258 (BECOAT) <br> * column 6, line 47 - column 10, line 55; figures 10-13 * | 2-4 | |
| A | | 1,2,6,7 | |
| A | FR-A-2 556 305 (ROBERT D.) <br> * the whole document * | 1 | |
| A | US-A-3 268 025 (FEHN) <br> * figure 4 * | 1,2 | |
| P,X | US-A-5 116 070 (BECOAT) <br> * the whole document * | 1,3 | |
| A | | 2,4 | |
| P,X | EP-A-0 456 250 (ERLSTON L.J.) <br> * abstract; figures 1-3 * | 1 | **TECHNICAL FIELDS SEARCHED (Int. Cl.5)** |
| | ----- | | B62M |

The present search report has been drawn up for all claims

| Place of search | Date of completion of the search | Examiner |
|---|---|---|
| THE HAGUE | 16 SEPTEMBER 1992 | DENICOLAI G. |